# EUROPEAN PATENT SPECIFICATION

(11) **EP 3 216 197 B1**
(45) Date of publication and mention of the grant of the patent: **04.03.2020**
(21) Application number: 15790894.8
(22) Date of filing: 02.11.2015
(51) Int. Cl.: H04M 1/725, H04M 3/38, G08B 25/01, H04M 3/51

(54) **METHOD FOR HANDLING AN EMERGENCY REQUEST IN A COMMUNICATION DEVICE**
VERFAHREN ZUR HANDHABUNG EINER NOTFALLANFRAGE IN EINER KOMMUNIKATIONSVORRICHTUNG
PROCÉDÉ DE GESTION D'UNE DEMANDE D'URGENCE DANS UN DISPOSITIF DE COMMUNICATION

(30) Priority: 03.11.2014 NL 2013730
(43) Date of publication of application: 13.09.2017
(73) Proprietor: Amicimi nv, 9051 Sint-Denijs-Westrem (BE)
(72) Inventor: DAUWE, Stefaan Benedicte Emiel Jacqueline, B-8200 Brugge (BE); VAN QUICKENBORNE, Frederic Guy Hélène, B-8000 Brugge (BE); ECK, Robert Nils, B-8000 Brugge (BE)
(74) Representative: Brantsandpatents bvba
(86) International application number: PCT/EP2015/075366
(87) International publication number: WO 2016/071248

(56) References cited:
- US-A1- 2008 299 941
- US-A1- 2010 197 351
- US-A1- 2014 253 326

## Description

The invention relates to a method according to the preamble of claim 1.

Such a method is known from US 2014253326.

Furthermore, US 20040266390 describes a system in which a telephone calls an operator of an emergency services centre after having received an emergency signal from an emergency device with the intention of seeking help for a carrier of the emergency device. Stored on the emergency device are data which the telephone retrieves from the emergency device at the request of the operator or automatically, and sends to the operator. The position of the telephone is determined using a GPS receiver in the telephone or by the network to which the telephone is connected. The position of the telephone is also transmitted to the operator by the telephone. The operator ensures that an emergency service is not called in unnecessarily. The operator does this on the basis of data and possible information from the victim received with a microphone of the telephone, or the absence of information. The intervention of the operator may however involve costs per contact associated with the service provided by the emergency services centre, in addition to the cost of calling the emergency services centre. On the other hand a user will want to generate an emergency signal as quickly as possible in order to ensure that the operator optionally becomes involved, or at least to give the impression that he (or she) as user is in contact with others, such as the operator, and can be sure that, if necessary and if the user is no longer in control, the operator becomes involved.

The technical problem thus occurs here of being able to receive and automatically filter premature emergency signals from a user in order to prevent a false alarm.

The object of the invention is achieved in that the invention provides a method as according to claim 1.

Because the data are stored and the input of a sensor of the communication device is received, it is possible to make a comparison with the received input.

Because a comparison is made in response to the emergency signal and contact is only made with the alarm responder subject to the comparison, filtering takes place automatically and unnecessary contact with the alarm responder is avoided. An alarm responder is not necessary however to put the user at ease, since the user already knows when the method is initiated that a protective method is active. Furthermore, no unnecessary energy is wasted on the comparison, since the comparison takes place only in response to the emergency signal. This is advantageous for instance when the communication device runs on batteries or accumulators.

It is understood here that "in response to the emergency signal" can relate to the communication device receiving the emergency signal from an external alarm device as well as the emergency signal being detected on the communication device when it is for instance provided by keying in an emergency number in an app or tapping a button shown on a touch-sensitive screen in an app on the communication device itself.

By repeating a part of the method in the case of a positive outcome, i.e. from and including the step of receiving input with a sensor of a communication device, instead of making contact with an alarm responder by means of the communication device, this making contact is delayed or cancelled.

Owing to the repetition the method is hereby also usable in situations of longer duration in which the user feels threatened.

It will be apparent to the skilled person that during the repetition the method may possibly result in step (d) being performed.

Because the communication device makes contact with the alarm responder when there is no match, the method is safe. After all, if the user is incapable of receiving a corresponding input or the communication device has been taken from the user, it is advantageous to have the communication device make contact with the alarm responder.

In an embodiment the received input corresponds to:
- a movement of the external alarm device, including for instance the external alarm device being dropped;
- a movement of the communication device, including for instance the communication device being dropped;
- a manual input on the communication device via a touchscreen (i.e. a touch-sensitive screen);
- an electrical signal corresponding to a key being pressed on the communication device, optionally in a sequence wherein either the length varies between long and short during pressing or the intervals vary in length, a slide button on the communication device being displaced, an area on the touch-sensitive screen being tapped, a determined pattern being drawn or copied on a touch-sensitive screen;
- input on a third device, such as a smartwatch connected to the communication device via a wireless connection, such as an electrical signal corresponding to a pattern being drawn on a touch-sensitive screen of the smartwatch; or
- sound, such as one or more spoken words.

The above is not an exhaustive list of embodiments of received input.

The alarm responder can for instance be an emergency services centre or a trusted person.

In a preferred embodiment the comparison has a positive outcome in the case of a match between the received input and at least a part of the data.

In a preferred embodiment the comparison has a negative outcome in the case there is no match between the received input and at least a part of the data.

In a preferred embodiment contact is made with the alarm responder by the communication device in the case of a negative outcome.

In a preferred embodiment the method ends in the case of a positive outcome. In this case contact is not therefore made with the alarm responder.

A comparison of the received input to at least a part of the stored data is understood here to mean that either the whole of the received input or a part of the received input is compared to at least a part of the stored data.

An embodiment of the invention is further provided by the method according to claim 2.

Performing the steps (b), (c) and (d) on the communication device requires a minimum of data transport, whereby the steps can be performed quickly, this contributing toward safety, and can be performed efficiently, which is advantageous for energy consumption and thus possibly for operating time in the case of a rechargeable communication device.

An embodiment of the invention is further provided by the method according to claim 3.

Because the data are stored on the communication device by means of storage means (for instance in a flash memory, SSD or other forms of electrical memory carrier) and the comparing means are located on the communication device, the comparison can be performed quickly and efficiently because the data does not have to be retrieved from a different device.

It is moreover not necessary for the user to have at his/her disposal further devices once the comparison has started. This contributes toward safety since any additional device may be dropped, may be taken from the user by an assailant, and because the batteries of the additional device can run out, wherein the method could be disrupted in all these cases.

An embodiment of the invention is further provided by the method according to claim 4.

Because the communication device receives the emergency signal from an external alarm device, the communication device need not be configured for easy or quick access by a user in order to set off the alarm and thereby activate the emergency signal. Communication devices such as mobile phones or smart phones are as a rule locked, and unlocking requires an extra operation. In the case of external devices such as emergency buttons specialization is possible, whereby the emergency input can be provided easily or quickly and the mobile phone or smart phone need not be modified, which could be to the detriment of the convenience of use thereof for uses other than as an alarm.

An embodiment of the invention is further provided by the method according to claim 5.

A call signal is here a sound which is associated with a telephone ringing during an incoming call, such as a ring tone.

By playing a call signal on the communication device it is possible to scare off a possible assailant of the user since possible assailants are usually startled by noise because it may alert other persons in the vicinity of the user and because a call signal indicates that there is contact with others via the communication device. Because this is on the basis of the emergency signal, contact is moreover not necessary here between the communication device and an external communication system, such as a GSM network.

An embodiment of the invention is further provided by the method according to claim 6.

Because playing of the call signal is delayed, the receiver will not know exactly when the call signal will be given. This makes it easier for the receiver to seem surprised by the call signal.

The delay means can for instance comprise a processor of the communication device and software code, wherein the software code comprises a loop or incremental counter.

An embodiment of the invention is further provided by the method according to claim 7.

By checking whether an input corresponding to the call signal has been received and then activating steps (b), (c) and (d) it is possible to filter whether a possible assailant is answering the call signal instead of the user.

In an embodiment the input corresponding to the call signal comprises of:
- pressing keys in a sequence for periods of different lengths (long or short) or at intervals of different lengths (long or short);
- drawing a determined pattern on a touch-sensitive screen of the communication device or even a third device such as a smartwatch connected to the communication device;
- sliding a lock on a touch-sensitive screen;
- tapping an area on the touch-sensitive screen; or
- pressing a button which thereby physically moves.

The above is not an exhaustive list of embodiments of input corresponding to the call signal.

In an advantageous embodiment step (a1) comprises of checking whether the input corresponding to the call signal has been received by the communication device and step (a2) comprises of activating software for performing steps (b), (c) and (d) on the communication device when the corresponding input is received.

Checking whether the communication device has received the corresponding input makes it possible to use the communication device in energy-saving manner. Performing steps (b), (c) and (d) does after all require energy, and this is prevented subject to the check.

In an advantageous embodiment the communication means of the communication device are activated in a subsequent step in order to establish contact with an alarm responder if no input corresponding to the call signal has been received or if it has not been received within a response period following the beginning or ending of the call signal.

An embodiment of the invention is further provided by the method according to claim 8.

Because the outcome is compared in the further comparison to an option selector which corresponds to the part of the data, and by determining subject to the further outcome of the further comparison whether the communication device has to be activated in order to make contact with the alarm responder or not, it is possible in the one case to have a match result in this activation and in the other case to conversely have a difference result in this activation. Data of diverse nature can be hereby used.

An embodiment of the invention is further provided by the method according to claim 9.

By continuing the method from and including step (b) the method is suitable for providing security in situations of longer duration in which the user feels threatened.

It will be apparent to the skilled person that during the repetition the method may possibly result in the decision to indeed have the communication device make contact with the alarm responder in step (d).

An embodiment of the invention is further provided by the method according to claim 10.

Because the communication device comprises a microphone and an audio clip picked up by the microphone is compared to a control clip the user can pay as much attention as possible to his/her surroundings without the user for instance having to look at the communication device. The user can moreover also talk to a possible assailant or possible emergency staff in the vicinity and combine this with the comparison by avoiding, or conversely making, determined sounds while talking, for instance by using or avoiding determined words.

An embodiment of the invention is further provided by the method according to claim 11.

Because the communication device comprises a loudspeaker and plays an instruction fragment via the loudspeaker in order to request input, interaction between the method and the user is possible. Interaction has the advantage that the user is left to his/her own devices less since the user can follow the instruction and so need not rely on for instance his/her memory.

An embodiment of the invention is further provided by the method according to claim 12.

Because the communication device sends the stored input to the alarm responder when making contact, the responder receives additional information about the situation during the contact. The user need not therefore provide this information him/herself, whereby the method contributes toward safety. The user may after all no longer be capable of providing the information or may forget something, and the method can automate and accelerate this.

An embodiment of the invention is further provided by the method according to claim 13.

By playing a message to the user, the user can be provided with useful information. The user can moreover be reassured by the message.

Playing the message takes place in response to the emergency signal, not only so as to prevent the message being played inappropriately but also so as to realize an energy-efficient method.

Examples of embodiments of the invention will be described hereinbelow using the accompanying schematic figure.

No attempt is otherwise made with the examples to provide an exhaustive list of examples or to otherwise limit the invention to the precise configurations as shown in the figure or described in the following detailed description.

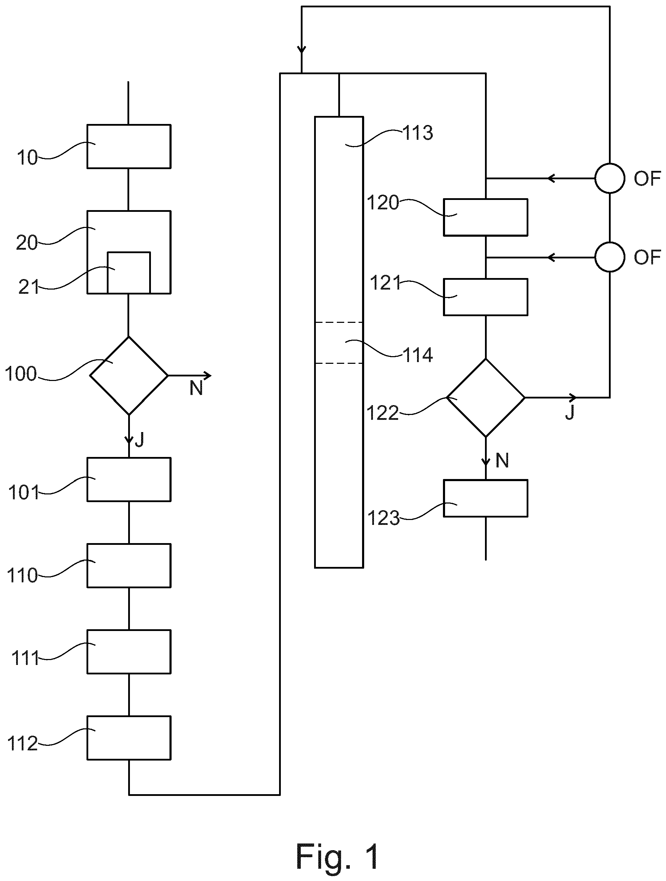

Figure 1 shows an example of a flow diagram of an example of the method according to the invention.

In an example of a method according to the invention an emergency device is paired (10) with a communication device, here a smart phone, for making a Bluetooth® connection. The method is illustrated on the basis of figure 1. The emergency device is provided with two buttons. An app is installed on the smart phone and data are stored (20) here in storage means of the smart phone, in this example an SSD memory of the smart phone. The app is software, the code of which is also stored in the storage means of the smart phone and which can be executed by a processor of the smart phone.

During use a user carries the emergency device in a pocket of his/her clothing, in this example a trouser pocket. The emergency device is configured to check (100) whether the two buttons are being pressed simultaneously. When the two buttons are pressed simultaneously, the emergency device sends (101) an emergency signal to the smart phone of the user via the Bluetooth connection, while if the two buttons are not being pressed simultaneously nothing happens.

When the emergency signal is received (110) by the smart phone, the app is activated (111), i.e. a microprocessor of the smart phone is activated in order to run software code of the app.

After activation of the app, the app has the smart phone reproduce (112) an acoustic call signal.

In an optional step (not shown in figure 1) playback of the call signal is delayed by for instance 10, 15 or 20 seconds, or for instance a random moment within a period of 30 seconds, by means of delay means, such as a microprocessor which runs software code of the app, wherein the code comprises an incremental counter in a loop.

In a subsequent step (113) the app, immediately following activation (111), also starts recording (113) sound via a microphone of the smart phone in a sound recording which is also stored in the SSD memory of the smart phone. Immediately following the playback (112) of the acoustic call signal software is run in the app which checks whether input corresponding to the call signal has been received on the communication device.

In this case the software checks whether a pattern has been drawn on a touch-sensitive screen of the smart phone so as to unlock the communication device. This pattern is not shown on the touch-sensitive screen. If the pattern has been drawn, this counts as an identification of the user as the one who has entered the pattern.

If this pattern is not drawn in time on the touch-sensitive screen, a transmitter of the smart phone is activated to make contact with an alarm responder. Once the connection with the emergency services centre has been established, the app ensures that the smart phone transmits data relating to the location of the smart phone to the emergency services centre. The location of the smart phone is determined using location-determining means in the smart phone, such as a GPS receiver. The app moreover ensures that the sound recordings are sent to the alarm responder.

If this pattern is indeed drawn in good time on the touch-sensitive screen, the method is continued with the steps below.

The app then plays (120) a message fragment comprised in the data via a loudspeaker of the smart phone, to which the user can listen. The message fragment comprises for instance a reassuring message. The message fragment is inserted into the sound recording.

The app then plays (121) an instruction fragment via the loudspeaker of the smart phone. The instruction fragment is inserted into the sound recording. The instruction fragment is selected from a collection of instruction fragments comprised in the data. In this example the user is given the instruction to say: "Everything OK".

As the processor of the smart phone continues to run the app an instruction is given to read parts of the SSD memory. On the smart phone a microprocessor ensures that steps in the software code of the app are performed. With further continuation of the steps of the app an audio clip from the sound recording is compared (122) to a control clip which is a stored as part of the data and which corresponds to the instruction fragment via a comparison routine of the app. The microprocessor and the software code are deemed here to be comparing means. This is possible via comparison routines known to the skilled person for comparing spoken instructions to control clips.

The audio clip can for instance take up the whole time span between playback of the instruction fragment and the beginning of the comparison step (122), or for instance a part thereof.

Recording (114) of the audio clip between playback of the instruction fragment and the beginning of the comparison step (122) forms part of the step (113) of recording (113) sound via a microphone of the smart phone in a sound recording which is stored in the SSD memory of the smart phone.

When the comparison has a positive outcome, i.e. if it is established that a recorded audio clip corresponds to a control clip, the method is continued by replaying a message fragment or playing a new instruction fragment.

In other examples the start of the recording of sound is optionally also repeated, or a message fragment with an instruction fragment is not played. These examples are also illustrated in figure 1.

When however the comparison has a negative outcome, i.e. when the outcome of the comparison is that the control clip which is stored as part of the data differs from the audio clip from the sound recording, the app has the smart phone make contact (123) with an alarm responder via a transmitter. In this example making contact involves an emergency services centre being called with the transmitter. Once the connection with the emergency services centre has been established, the app ensures that the smart phone sends data relating to the location of the smart phone to the emergency services centre. The location of the smart phone is determined using location-determining means in the smart phone, such as a GPS receiver. The app moreover ensures that the sound recording is sent to the alarm responder.

The app in addition ensures that as many data as possible relating to the identity of the user and possible medical data of the user are sent to the alarm responder.

In order to obtain a reliable comparison of the audio clip to the control clip, the user is given a series of instructions as part of a calibration procedure (21) when the data are stored. Carrying out these instructions results in input from a sensor being received. The received input is made part of the data. In this example the sensor is the microphone of the smart phone and the instruction is to say "Everything OK" during the calibration procedure (21). The receiving of the input from the microphone, i.e. the sound picked up by the microphone, serves as control clip during the comparison (122).

In another example the instruction is given to say something, but not exactly what has to be said. The recording thereof during the calibration procedure (21) can serve as password during the comparison in the comparison step (122).

In yet another example the instruction is given to trace a line on a touch-sensitive screen of the smart phone with a finger, wherein the touch sensors in the touch-sensitive screen convert the movement to an electrical signal which is received in digitized manner and can be stored as part of the data in the calibration procedure (21).

In yet another example, instead of an instruction being given to say something during the calibration or as instruction fragment after the two buttons on the emergency device have been pressed, an instruction is given for instance to shake the telephone. This movement is detected by a motion sensor of the smart phone.

In a variant of the above stated example the app does not begin recording (113) sound immediately after being activated (111). Nor is playback (120) of the data fragment and playback (121) of the instruction fragment etc. started until after the call signal has been answered by the user, wherein answering consists of the smart phone receiving a signal via the touchscreen that the user has tapped a software button.

In a variant of the above stated example an option selector associated with the control clip is also read from the storage means following the comparison in the comparison step (122). In a further comparison the outcome of the comparison is compared to the option selector.

A positive outcome of the comparison (i.e. if the control clip which is stored as part of the data corresponds to the audio clip from the sound recording) results in the further comparison of the outcome to the option selector, in this case with value "negative", whereby the method is carried on with renewed playback of a message fragment or instruction fragment.

The recording of sound continues as normal here, or is for instance restarted when a message fragment (corresponding to step (120)) or instruction fragment (corresponding to step (121)) is replayed.

When the instruction is to say "Help" if immediate contact has to be made with an alarm responder, a different option selector corresponds. The option selector which corresponds to this instruction has the value "positive". If after a positive outcome (i.e. in the case of a match in the comparison) the further comparison, in which the outcome of the comparison is compared for a match with the value of the option selector, also has a positive outcome, the communication means of the smart phone are activated to make contact (123) with an alarm responder.

## Claims

1. Method, comprising the steps of:
- (a) storing data (20) by means of storage means;
- (b) receiving input (113, 114) with a sensor of a communication device;
- (c) determining with comparing means in response to an emergency signal (110) an outcome of a comparison (122) of the received input to at least a part of the stored data; and
- (d) determining subject to the outcome whether communication means of the communication device must be activated so as to make contact with an alarm responder,
**characterized in that**
when the comparison has a positive outcome in the case of a match between the received input and at least a part of the data, the method after step (c) is continued from step (b) instead of step (d); and
when the comparison has a negative outcome in the case there is no match between the received input and at least a part of the data, the communication device makes contact with the alarm responder (123) in step (d).

2. Method as claimed in claim 1, comprising the step of activating software in response to the emergency signal for performing steps (b), (c) and (d) on the communication device.

3. Method as claimed in claim 1 or 2, wherein
- the data are stored on the communication device in step (a) by means of storage means on the communication device; and
- the comparison is made in step (c) by comparing means of the communication device.

4. Method as claimed in claim 1, 2 or 3, wherein in a step (e) prior to step (c) the communication device receives the emergency signal from an external alarm device.

5. Method as claimed in claim 1, 2, 3 or 4, wherein in a step (f) prior to step (c) a call signal is played by the communication device in response to the emergency signal.

6. Method as claimed in claim 5, wherein playing of the call signal in step (f) is delayed with delay means until a minimum time period has elapsed following receiving of the emergency signal.

7. Method as claimed in claim 5 or 6, comprising the steps of:
- (a1) checking whether an input corresponding to the call signal has been received; and
- (a2) activating software for performing steps (b), (c) and (d) on the communication device when the corresponding input is received.

8. Method as claimed in any of the claims 1-7, wherein step d) comprises of comparing the outcome of the comparison in a further comparison to an option selector which corresponds to the part of the data in order to determine a further outcome; and step d) also comprises of determining subject to the further outcome whether the communication means of the communication device have to be activated in order to make contact with an alarm responder.

9. Method as claimed in claim 8, wherein as alternative to determining in step d) that the communication means of the communication device have to be activated subject to the further outcome, it is determined that the method be continued from and including step (b).

10. Method as claimed in any of the foregoing claims, wherein
- the communication device comprises a microphone;
- receiving input with a sensor of the communication device comprises of picking up an audio clip with the microphone;
- the data comprises a control clip;
- the comparison in step (c) comprises of comparing the audio clip picked up by the microphone to a control clip.

11. Method as claimed in any of the foregoing claims, wherein the communication device comprises a loudspeaker and plays an instruction fragment for the user via the loudspeaker in order to request the user to provide input to the communication device which corresponds to at least a part of the data.

12. Method as claimed in any of the foregoing claims, wherein a storage means stores all input in the sensor after receiving the emergency input and the communication device sends the stored input to the alarm responder when making contact with the alarm responder.

13. Method as claimed in any of the foregoing claims, wherein the communication device comprises a loudspeaker and plays a message fragment to the user via the loudspeaker in response to the emergency signal.

## Patentansprüche

1. Verfahren, folgende Schritte umfassend:
- (a) Speichern von Daten (20) mit Hilfe von Speichermitteln,
- (b) Empfangen von Eingabe (113, 114) mittels eines Sensors eines Kommunikationsgeräts,
- (c) Bestimmen eines Ergebnisses eines Vergleichs (122) der empfangenen Eingabe mit mindestens einem Teil der gespeicherten Daten mittels Vergleichsmitteln in Reaktion auf ein Notsignal (110); und
- (d) Bestimmen gemäß dem Ergebnis, ob Kommunikationsmittel des Kommunikationsgeräts aktiviert werden müssen, so dass ein Kontakt mit einem Alarm-Responder hergestellt wird,
**dadurch gekennzeichnet, dass**
das Verfahren nach Schritt (c) von Schritt (b) anstelle von Schritt (d) aus fortgesetzt wird, wenn der Vergleich im Fall einer Übereinstimmung zwischen der empfangenen Eingabe und mindestens einem Teil der Daten ein positives Ergebnis hat; und
das Kommunikationsgerät in Schritt (d) den Kontakt mit dem Alarm-Responder (123) herstellt, wenn der Vergleich im Fall einer nicht-Übereinstimmung zwischen der empfangenen Eingabe und mindestens einem Teil der Daten ein negatives Ergebnis hat.

2. Verfahren nach Anspruch 1, den Schritt des Aktivierens von Software in Reaktion auf das Notsignal zwecks Ausführens der Schritte (b), (c) und (d) auf dem Kommunikationsgerät umfassend.

3. Verfahren nach Anspruch 1 oder 2, wobei
- die Daten in Schritt (a) mit Hilfe von Speichermitteln auf dem Kommunikationsgerät in das Kommunikationsgerät gespeichert werden; und
- der Vergleich in Schritt (c) durch Vergleichsmittel des Kommunikationsgeräts erfolgt.

4. Verfahren nach Anspruch 1, 2 oder 3, wobei das Kommunikationsgerät in einem Schritt (e) vor Schritt (c) das Notsignal von einem externen Alarmgerät empfängt.

5. Verfahren nach Anspruch 1,2 ,3 oder 4, wobei in einem Schritt (f) vor Schritt (c) von dem Kommunikationsgerät in Reaktion auf das Notsignal ein Rufsignal abgespielt wird.

6. Verfahren nach Anspruch 5, wobei das Abspielen des Rufsignals in Schritt (f) mittels Verzögerungsmitteln verzögert wird, bis nach dem Empfang des Notsignals eine minimale Zeitspanne verstrichen ist.

7. Verfahren nach Anspruch 5 oder 6, folgende Schritte umfassend:
- (a1) Prüfen, ob eine Eingabe empfangen wurde, die dem Rufsignal entspricht; und
- (a2) Aktivieren von Software zum Ausführen der Schritte (b), (c) und (d) auf dem Kommunikationsgerät, wenn die entsprechende Eingabe empfangen wurde.

8. Verfahren nach einem der Ansprüche 1-7, wobei Schritt d) das Vergleichen des Ergebnisses des Vergleichs in einem weiteren Vergleich mit einem Optionenauswahlelement umfasst, das dem Teil der Daten entspricht, um ein weiteres Ergebnis zu bestimmen; und Schritt d) außerdem das Bestimmen gemäß dem weiteren Ergebnis, ob die Kommunikationsmittel des Kommunikationsgeräts aktiviert werden müssen, um Kontakt mit einem Alarm-Responder herzustellen, umfasst.

9. Verfahren nach Anspruch 8, wobei als Alternative zum Bestimmen gemäß dem weiteren Ergebnis in Schritt d), dass die Kommunikationsmittel des Kommunikationsgeräts aktiviert werden müssen, bestimmt wird, dass das Verfahren von einschließlich Schritt (b) aus fortgesetzt wird.

10. Verfahren nach einem der vorhergehenden Ansprüche, wobei
- das Kommunikationsgerät ein Mikrofon umfasst,
- das Empfangen von Eingabe mittels eines Sensors des Kommunikationsgeräts das Aufnehmen eines Audioclips mit dem Mikrofon umfasst,
- die Daten einen Kontrollclip umfassen,
- der Vergleich in Schritt (c) das Vergleichen des mit dem Mikrofon aufgenommenen Audioclips mit einem Kontrollclip umfasst.

11. Verfahren nach einem der vorhergehenden Ansprüche, wobei das Kommunikationsgerät einen Lautsprecher umfasst und über den Lautsprecher ein Anweisungsfragment für den Benutzer abspielt, um den Benutzer aufzufordern, eine Eingabe in das Kommunikationsgerät bereitzustellen, die mindestens einem Teil der Daten entspricht.

12. Verfahren nach einem der vorhergehenden Ansprüche, wobei ein Speichermittel sämtliche Eingabe in den Sensor nach dem Empfangen der Noteingabe speichert und das Kommunikationsgerät die gespeicherte Eingabe an den Alarm-Responder sendet, wenn der Kontakt mit dem Alarm-Responder hergestellt ist.

13. Verfahren nach einem der vorhergehenden Ansprüche, wobei das Kommunikationsgerät einen Lautsprecher umfasst und in Reaktion auf das Notsignal über den Lautsprecher ein Nachrichtenfragment für den Benutzer abspielt.

## Revendications

1. Procédé, comprenant les étapes consistant à :
- (a) stocker des données (20) au moyen d'un moyen de stockage ;
- (b) recevoir une entrée (113, 114) avec un capteur d'un dispositif de communication ;
- (c) déterminer avec un moyen de comparaison en réponse à un signal d'urgence (110) un résultat d'une comparaison (122) de l'entrée reçue avec au moins une partie des données stockées ; et
- (d) déterminer en fonction du résultat si le moyen de communication du dispositif de communication doit être activé de manière à prendre contact avec un personnel d'urgence,
**caractérisé en ce que**
lorsque la comparaison a un résultat positif dans le cas d'une correspondance entre l'entrée reçue et au moins une partie des données, le procédé après l'étape (c) se poursuit à partir de l'étape (b) au lieu de l'étape (d) ; et
lorsque la comparaison a un résultat négatif dans le cas où il n'y a pas de correspondance entre l'entrée reçue et au moins une partie des données, le dispositif de communication prend contact avec le personnel d'urgence (123) à l'étape (d).

2. Procédé selon la revendication 1, comprenant l'étape consistant à activer un logiciel en réponse au signal d'urgence pour exécuter les étapes (b), (c) et (d) sur le dispositif de communication.

3. Procédé selon la revendication 1 ou 2, dans lequel
- les données sont stockées sur le dispositif de communication à l'étape (a) au moyen d'un moyen de stockage sur le dispositif de communication ; et
- la comparaison est effectuée à l'étape (c) par un moyen de comparaison du dispositif de communication.

4. Procédé selon la revendication 1, 2 ou 3, dans lequel, dans une étape (e) avant l'étape (c), le dispositif de communication reçoit le signal d'urgence à partir d'un dispositif d'alarme externe.

5. Procédé selon la revendication 1, 2, 3 ou 4, dans lequel, dans une étape (f) avant l'étape (c), un signal d'appel est lu par le dispositif de communication en réponse au signal d'urgence.

6. Procédé selon la revendication 5, dans lequel la lecture du signal d'appel à l'étape (f) est retardée par un moyen de retard jusqu'à ce qu'une période de temps minimale se soit écoulée après la réception du signal d'urgence.

7. Procédé selon la revendication 5 ou 6, comprenant les étapes consistant à :
- (a1) vérifier si une entrée correspondant au signal d'appel a été reçue; et
- (a2) activer le logiciel pour exécuter les étapes (b), (c) et (d) sur le dispositif de communication lorsque l'entrée correspondante est reçue.

8. Procédé selon l'une quelconque des revendications 1-7, dans lequel l'étape d) comprend de comparer le résultat de la comparaison dans une autre comparaison à un sélecteur d'option qui correspond à la partie des données afin de déterminer un autre résultat; et l'étape d) comprend également de déterminer en fonction de l'autre résultat si le moyen de communication du dispositif de communication doit être activé afin de prendre contact avec un personnel d'urgence.

9. Procédé selon la revendication 8, dans lequel comme alternative à la détermination dans l'étape d) que le moyen de communication du dispositif de communication doit être activé en fonction de l'autre résultat, il est déterminé que le procédé se poursuit à partir de l'étape (b) incluse.

10. Procédé selon l'une quelconque des revendications précédentes, dans lequel
- le dispositif de communication comprend un microphone;
- la réception d'une entrée avec un capteur du dispositif de communication comprend de capturer un clip audio avec le microphone;
- les données comprennent un clip de contrôle ;
- la comparaison de l'étape (c) comprend de comparer le clip audio capturé par le microphone à un clip de contrôle.

11. Procédé selon l'une quelconque des revendications précédentes, dans lequel le dispositif de communication comprend un haut-parleur et lit un fragment d'instruction pour l'utilisateur via le haut-parleur afin de demander à l'utilisateur de fournir une entrée au dispositif de communication qui correspond à au moins une partie des données.

12. Procédé selon l'une quelconque des revendications précédentes, dans lequel un moyen de stockage stocke toutes les entrées du capteur après avoir reçu l'entrée d'urgence et le dispositif de communication envoie l'entrée stockée au personnel d'urgence lors de la prise de contact avec le personnel d'urgence.

13. Procédé selon l'une quelconque des revendications précédentes, dans lequel le dispositif de communication comprend un haut-parleur et lit un fragment de message à l'utilisateur via le haut-parleur en réponse au signal d'urgence.
